# EUROPÄISCHE PATENTANMELDUNG

(11) **EP 0 785 103 A1**
(43) Veröffentlichungstag der Anmeldung: **23.07.1997**
(21) Anmeldenummer: 97100507.9
(22) Anmeldetag: 15.01.1997
(51) Int. Cl.: B60R 1/08

(54) **Lichtleiter am Innenspiegel**

(30) Priorität: 19.01.1996 DE 29600859 U
(71) Anmelder: HOHE GmbH & Co. KG, D-97903 Collenberg (DE)
(72) Erfinder: Kaspar, Rudolf, 97903 Collenberg (DE); Polzer, Herwig, 63897 Miltenberg (DE)
(74) Vertreter: Zinngrebe, Horst, Dr.rer.nat.

(57) **Zusammenfassung**

Beschrieben wird ein Fahrzeugrückspiegel mit Spiegelglas (1) und einer lichtelektrisch gesteuerten Abblendeinrichtung für das Spiegelglas (1), wobei die Abblendeinrichtung einen lichtelektrischen Wandler (7) aufweist, der mit einer auf einer Platine (3) befestigten elektronischen Schaltung verbunden ist. Um die Anordnung des Wandlers (7) im Blendlicht zu vereinfachen ist ein Lichtleiter (10) vorgesehen, dessen freie Stirnfläche (12) neben dem Spiegelglas (1) und im wesentlichen parallel zu der äußeren Spiegelglasfläche (8) angeordnet ist und dessen andere Stirnfläche vor dem auf der Platine (3) befestigten Wandler (7) gehalten ist.

## Beschreibung

Die Erfindung betrifft einen Fahrzeugrückspiegel mit Spiegelglas und einer lichtelektrisch gesteuerten Abblendeinrichtung für das Spiegelglas, wobei die Abblendeinrichtung einen lichtelektrischen Wandler aufweist, der mit einer auf einer Platine angeordneten elektronischen Schaltung verbunden ist.

Automatisch abblendende Kraftfahrzeug-Innenspiegel werden durch den Wandler, auch Blendlichtsensor genannt, angesteuert, der hinter dem Spiegelglas angeordnet ist (DE-43 22 937-A1). Dazu muß in dem Reflexionsbelag des Spiegelglases an der Stelle, hinter der der Blendlichtsensor angeordnet werden soll, eine Aussparung angebracht werden. Das Anbringen einer derartigen Aussparung ist nicht nur kostenintensiv, sondern bietet auch Angriffsstellen für Korosion des Spiegelbelags.

Ferner ist es bekannt (DE-U-78 01 893), Wandler in Form von Photowiderständen in Bereichen außerhalb des Spiegelglases vorzusehen, indem diese in den das Glas umschließenden Rand des Spiegelgehäuses eingeklemmt werden. Da die Platine der elektronischen Schaltung nicht bis hinter den Rand reicht, erfordert diese Maßnahme eine spezielle Haltevorrichtung für den Wandler sowie elektrische Zuführungen von der elektronischen Schaltung zu dem Wandler.

Der Erfindung liegt die Aufgabe zugrunde, die Anordnung des Wandlers im Blendlicht zu vereinfachen. Dazu ist nach der Erfindung bei dem eingangs genannten Fahrzeugrückspiegel ein Lichtleiter vorgesehen, dessen freie Stirnfläche neben dem Spiegelglas und im wesentlichen parallel zu der äußeren Spiegelglasfläche angeordnet ist und dessen andere Stirnfläche vor dem auf der Platine befestigten Wandler gehalten ist. Nach der Erfindung kann der Wandler außerhalb des Blendlichteinfalls im Inneren des Rückspiegelgehäuses auf der Platine angeordnet werden, während der Lichtleiter über seine im Blendlichteinfall angeordnete freie Stirnfläche das aufgenommene Blendlicht dem Wandler zuführt. Der selbsttragende, beispielsweise aus Kunststoff bestehende Lichtleiter kann auf der Platine mittels einer Klammer, Schelle oder dergleichen Befestigungselementen befestigt und so geformt sein, daß sich seine freie Stirnfläche etwa hinter einer Öffnung im das Spiegelglas umfassenden Kunststoffgehäuserand sich befindet.

Weitere bevorzugte Ausführungsformen der Erfindung sind in den Unteransprüchen angegeben.

Die Erfindung ist nachstehend anhand der beigefügten Zeichnung im einzelnen beschrieben. Es zeigen:
- Fig. 1: eine schematische Ansicht eines Kfz-Innenrückblickspiegels ohne Gehäuse und Halterung und
- Fig. 2: eine schematische Seitenansicht des Innenspiegels nach Fig. 1.

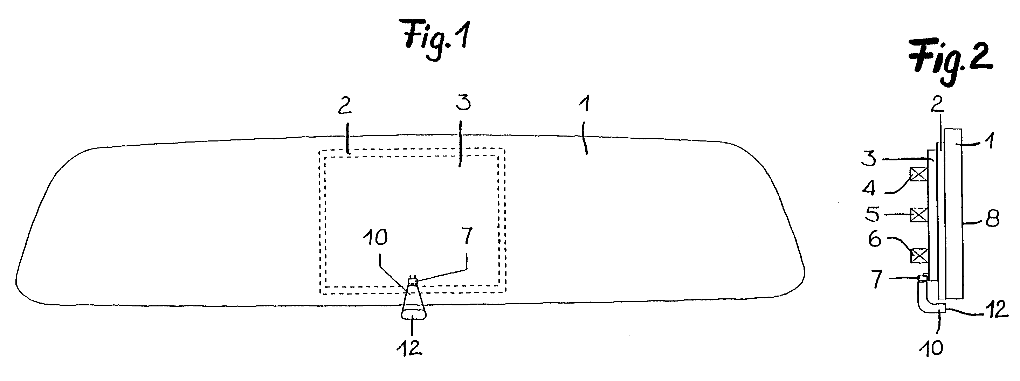

Ein Pkw-Innenspiegel gemäß Figuren 1 und 2 aus DE-43 22 937, der allerdings nicht mechanisch, sondern gemäß EP-70 034 B1 elektrisch abblendbar ist, besitzt ein elektrochromatisches Spiegelglas 1, auf dessen Rückseite in einem mittleren Abschnitt seiner Quererstreckung eine Kunststoffträgerplatte 2 aufgeklebt ist. Auf der vom Spiegelglas 1 abgewandten Oberfläche der Trägerplatte 2 sitzt eine Platine 3, auf welcher verschiedene elektronische Bauteile 4, 5, 6 einer elektronischen Schaltung befestigt sind. Zu diesen Bauteilen gehört auch ein fotoelektrischer Wandler 7, der ebenfalls auf der Platine 3 gehalten und mit der elektronischen Schaltung verbunden ist. Die lichtempfindliche Wandlerfläche möge in dem dargestellten Ausführungsbeispiel der Erfindung sich quer zur Außenfläche 8 des Spiegelglases 1 und hinter diesem erstrecken und von unten zugänglich sein. In der dargestellten Einbauposition des Wandlers 7 wird seine lichtempfindliche Fläche von Blendlicht eines Fahrzeugs nicht getroffen, das sich hinter dem mit dem Innenspiegel ausgerüsteten Fahrzeug befindet, weil die lichtempfindliche Fläche nicht nur vom Spiegelglas vom einfallenden Blendlicht abgedeckt, sondern auch von dem nicht dargestellten, das Spiegelglas 1 tragenden Spiegelgehäuse vollständig umschlossen ist, sich also stets im Dunkeln befindet.

Erfindungsgemäß ist an der Trägerplatte 2 in der Nähe des Wandlers 7 ein Lichtleiter 10 in nicht dargestellter Weise so befestigt, daß seine freie Stirnfläche 12 sich neben dem Spiegelglas 1 befindet und im wesentlichen parallel zur Außenfläche 8 des Spiegelglases 1 sich erstreckt. Im hier dargestellten Ausführungsbeispiel besteht der Lichtleiter 10 aus einem Kunststoff und ist daher formsteif, kann jedoch auch aus einem Bündel von Glasfasern bestehen. Der Lichtleiter 10 hat die bekannte Eigenschaft, daß über seine freie Stirnfläche 12 einfallendes Licht aufgrund der Totalreflexion an den Seitenwänden des beispielsweise im Querschnitt kreisförmigen oder elliptischen Lichtleiters innerhalb desselben im wesentlichen ohne Intensitätsverlust weitergeleitet wird und an der der freien Stirnfläche 12 gegenüberliegenden Stirnfläche aus dem Lichtleiter wieder austritt. Wie dargestellt, ist der Lichtleiter 10 weiterhin so an der Trägerplatte 2 befestigt, daß seine der freien Stirnfläche 12 gegenüberliegende Stirnfläche sich unmittelbar vor der lichtempfindlichen Fläche des Wandlers 7 befindet. Das in den Lichtleiter 10 einfallende Licht wird also von der freien Stirnfläche 12 zur lichtempfindlichen Fläche des Wandlers 7 geleitet.

Da die Länge und Formgebung des Lichtleiters 10 keinen Beschränkungen unterliegt, kann er so gebogen sein, daß die freie Stirnfläche 12 zur Erfassung von Blendlicht an geeigneter Stelle neben dem Spiegelglas 1 angeordnet werden kann. Dazu kann beispielsweise im Rand des nicht dargestellten Spiegelgehäuses eine Öffnung neben dem Spiegelglas 1 vorgesehen sein, hinter der die freie Stirnfläche 12 angeordnet ist. Sofern an den Rand des Spiegelgehäuses eine Zusatzleiste etwa gemäß der Leiste 50 in Fig. 1 der deutschen Offenlegungsschrift 43 22 937 vorgesehen ist, kann in dieser Leiste eine Öffnung vorhanden sein, hinter der die freie Stirnfläche 12 des Lichtleiters 10 gehalten ist.

## Patentansprüche

1. Fahrzeugrückspiegel mit Spiegelglas (1) und einer lichtelektrisch gesteuerten Abblendeinrichtung für das Spiegelglas, wobei die Abblendeinrichtung einen lichtelektrischen Wandler (7) aufweist, der mit einer auf einer Platine (3) befestigten elektronischen Schaltung (4, 5, 6) verbunden ist, gekennzeichnet durch einen Lichtleiter (10), dessen freie Stirnfläche (12) neben dem Spiegelglas (1) und im wesentlichen parallel zu der äußeren Spiegelglasfläche (8) angeordnet ist und dessen andere Stirnfläche vor dem auf der Platine befestigten Wandler (7) gehalten ist.

2. Rückspiegel nach Anspruch 1, dadurch gekennzeichnet, daß die freie Stirnfläche (12) des Wandlers (7) hinter einer Öffnung eines das Spiegelglas umgebenden Gehäuserandes gehalten ist.

3. Rückspiegel nach Anspruch 2, dadurch gekennzeichnet, daß sich die Öffnung im Bereich der unteren Mitte des Spiegelgehäuserandes befindet.

4. Rückspiegel nach einem oder mehreren der vorstehenden Ansprüche, dadurch gekennzeichnet, daß der Spiegelgehäuserand eine untere Leiste aufweist, in welcher die Öffnung für die freie Stirnfläche vorgesehen ist.

5. Rückspiegel nach einem oder mehreren der vorstehenden Ansprüche, dadurch gekennzeichnet, daß der Lichtleiter aus einem Kunststoff besteht.

6. Rückspiegel nach einem der Ansprüche 1 bis 5, dadurch gekennzeichnet, daß der Lichtleiter aus einem Glasfaserbündel besteht.
